Europäisches Patentamt

European Patent Office

Office européen des brevets

(11) Publication number: **0 050 975**
**B1**

# EUROPEAN PATENT SPECIFICATION

(45) Date of publication of patent specification: **06.11.85**

(51) Int. Cl.⁴: **H 01 M 6/18**

(21) Application number: **81305015.0**

(22) Date of filing: **23.10.81**

(54) Electrochemical cell.

(30) Priority: **24.10.80 US 200275**

(43) Date of publication of application:
**05.05.82 Bulletin 82/18**

(45) Publication of the grant of the patent:
**06.11.85 Bulletin 85/45**

(84) Designated Contracting States:
**DE FR GB**

(56) References cited:
**DE-A-2 849 294**
**US-A-3 644 145**
**US-A-4 118 549**

(73) Proprietor: **RAYOVAC Corporation**
**101 East Washington Avenue**
**Madison Wisconsin 53703 (US)**

(72) Inventor: **Joshi, Ashok Vendimadhav**
**117 Shankar Niwas Shivaji**
**Park Road, No. 3 Bombay (IN)**
Inventor: **Sholette, William Paul**
**826 Martha Lane**
**Warminster Pennsylvania, 18974 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

EP 0 050 975 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with lithium solid-state electrochemical cells.

US—A—3,455,742 is illustrative of disclosures relating to high energy density, solid-state, electrolytic cells having a lithium anode, a lithium-ion transport solid-state electrolyte and a cathode compatible with the electrolyte. It discloses the use of various types of cathodes, for example, iodine and carbon mixes of oxides and halides of polyvalent metals such as AgO, $MnO_2$, $PbO_2$, $V_2O_5$, $CeO_2$, $FeX_3$, $HgX_2$, $TlX_3$, $CuX_2$ and the like wherein X denotes a halide atom. Unspoken, but exemplified in this Patent specification is the belief that a separator-free cell having a halide electrolyte would be operative only if the halide of the electrolyte is the same as the halide of the cathode and a separator-free cell having an oxidic electrolyte would be operative only if the electrolyte is non-reactive with the cathode material under conditions of cell usage.

Up to now, it has been believed that a separator is necessary between the electrolyte and the cathode when cathode materials are used which are reactive with the electrolyte. US—A—4,118,549 discloses a solid-state electrochemical cell that includes a lithium anode, a lithium iodide electrolyte and a lead fluoride cathode, wherein the lead fluoride (which is a material which is reactive towards the electrolyte) is in contact with the electrolyte. While this cell is operative, the provision of an ionically conductive separator is disclosed therein as necessary. The separator layer includes transition metal chalcogenides having layered structure and transition metal chalcogenides having alkali metal ions. The provision of such separator layer is an expensive and critical manufacturing operation.

It is an object of the invention as defined with its further developments in the appendant claims to devise a lithium solid-state electrochemical cell which remedies the above-mentioned shortcomings, is easier to manufacture and provides for a hight energy density and is stable in storage.

It has been surprisingly discovered that when assembled in a lithium solid-state battery cell, a variety of specific reactive cathode materials will react with lithium-ion transport electrolytes in-situ to form the self-healing, electrolytically conductive microlayer of reaction product which will prevent further reaction and allow electrochemical usage of the anode and the cathode materials.

Solid state elecrochemical cells in accordance with the present invention generally are operative at ambient atmospheric temperatures and higher temperatures (within the solid-state range of the cell components) and are generally stable in storage.

The lithium anodes used in the cells of the present invention may be of any conventional form and composition i.e. the anode can be pure lithium or an alloy rich in lithium. Electrolytes used in cells of the invention comprise lithium nitride, lithium sulphide, lithium methaborate or lithium iodide (or mixtures thereof), which materials may be doped with dopants designed to increase their electrolytic conductivity. For example, as disclosed in US—A—3,837,920, suitable dopants (or conductivity enhancing additives) for lithium iodide include iodides of alkaline earth metals and some other divalent metals. Other materials such as phosphorus triiodide and boron triiodide can also be used as conductivity enhancing agents for lithium iodide. Preferably the electrolyte comprises suitably doped lithium iodide.

High energy density cathode materials useful in the present invention include chlorides and bromides of bismuth, tin, copper, lead and iron and fluorides of bismuth, tin, copper and iron. Preferred are cathodes containing bismuth bromide or ferric chloride. The use of these fluorides, chlorides or bromides is advantageous in that the energy density of these salts usually greater than the energy density of the corresponding iodide. For example, $BiCl_3$ has theoretical energy density of 1211 milliampere hours per cubic centimetre (mA hr $cm^{-3}$) compared to the theoretical energy density of 788 mA hrs $cm^{-3}$ of $BiI_3$. Furthermore cathode expansion of $BiCl_3$ is theoretically only about 24% on discharge whereas the theoretical expansion of $BiI_3$ on the discharge is about 33%. Accordingly, in many instances significant energy density and structural stability advantages can be achieved by use of chlorides, bromides or fluorides as cathodes rather than iodides.

An example of the electrolyte-cathode reaction that occurs in cells of the present invention is:

$$3LiI \text{ (electrolyte)} + BiCl_3 \text{ (cathode)} \rightarrow 3LiCl + BiI_3$$

Such a reaction, which has been avoided by the prior art, does occur to a very limited extent upon construction of the cell. However, the reaction products form a thin, protective layer which is self-healing and stops additional reaction. This layer is very thin. The protective layer forms substantially immediately on manufacture of the cell and nothing is necessary to its formation other than bringing the electrolyte and the cathode together in intimate contact as is conventional in solid state cell manufacture.

Electrochemical cells in accordance with the present invention will now be described in more detail, by way of example only, with reference to the accompanying drawings which show the discharge curves of cells according to the present invention:

Example I

Three cells each 1.52cm in diameter having a 0.3 g cathode of 1.8 $cm^2$ area and an anode area of 1.4 $cm^2$ were constructed using the following solid state electrochemical systems:

A. $Li/PI_3$(5m/o); $LiI/BiBr_3 \cdot I_2 \cdot TiS_2$
B. $Li/PI_3$(7.5m/o); $LiI/BiBr_3 \cdot I_2 \cdot TiS_2$
C. $Li/PI_3$(5m/o); $LiI/BiBr_3 \cdot TiS_2 \cdot Bi$

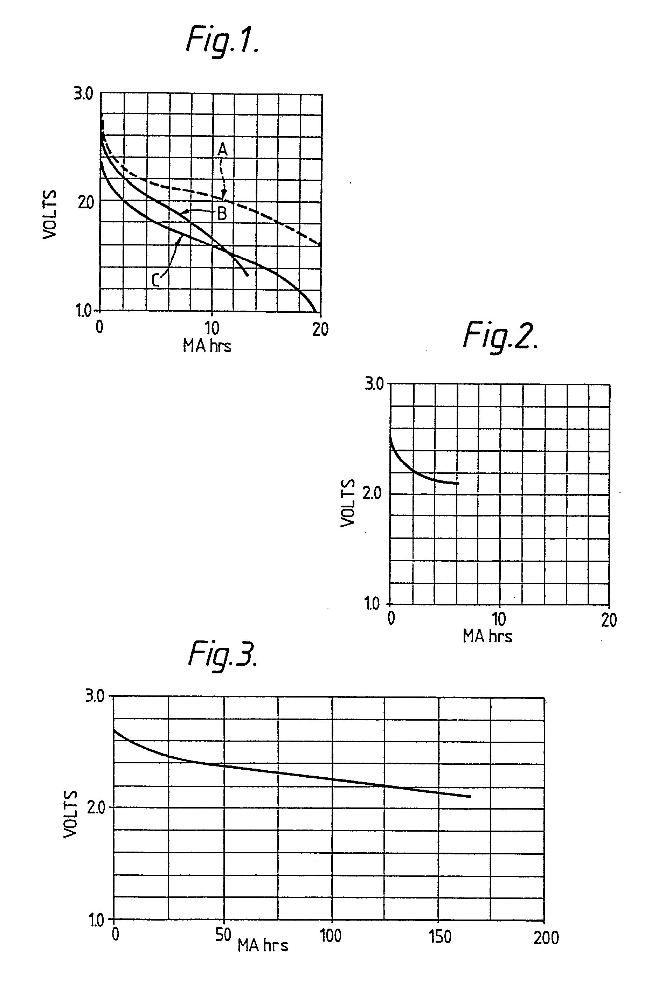

The stoichiometric capacities of cells A, B and C were 52, 52 and 42 mA hr respectively. Figure 1 of the drawing shows the discharge curves of these cells discharging at 37°C through an external load of 120 kilo-ohms.

Example II

Figure 2 of the drawing depicts a discharge curve of a cell of the invention discharging of 70°C through an external load of 120 kilo-ohms. This cell is based upon the system:

D. Li/LiBO$_2$; CaI$_2$(30m/o)/BiBr$_3 \cdot$ TiS$_2 \cdot$ Bi

The cell was 1.52 cm in diameter having a 0.3 g cathode of 1.8 cm$^2$ and a stoichiometric capacity of 45 mA hrs.

Example III

Figure 3 of the drawing depicts a discharge curve of a cell of the present invention discharging at 145±3°C through an external load of 3 kilo-ohms. This cell was based upon the system

Li/LiI · Al$_2$O$_3$ (weight ratio of
LiI/Al$_2$O$_3$=2/1)/BiBr$_3 \cdot$ TiS$_2 \cdot$ Bi

Example IV

Electrochemical button cells employing a lithium anode, a lithium iodide/alumina electrolyte and a ferric chloride/titanium disulphide cathode 1.52 cm in diameter were constructed having a stoichiometric energy capacity of 126 mA hrs. Upon discharge at 37°C through a 200 kilo-ohm resistance, two examples of the cell gave substantially identical discharge curves with the open circuit voltage being about 2.84 volts and the initial discharge plateau being at about 2.1 volts.

**Claims**

1. A solid-state lithium electrochemical cell having a lithium anode, a solid-state electrolyte capable of lithium ion transport having a high electronic resistivity and selected from the group of lithium nitride, lithium sulfide, lithium metaborate and lithium iodide, wherein said lithium anode is in contact with the solid state electrolyte, and a cathode reactive towards the electrolyte, so as to form, in-situ, a self-healing separator layer of electrolytically conductive reaction product of the electrolyte and the cathode material, the anode and the cathode being in electrolytic contact through the electrolyte and the in-situ formed, self-healing separator layer, characterized in that the cathode material is one or more of the chloride and bromide salts of bismuth, tin, copper, lead or iron and the fluoride salts of bismuth, tin, copper or iron.

2. An electrochemical cell as claimed in claim 1 characterized in that the cathode material is selected from the group of ferric chloride and bismuth bromide.

3. An electrochemical cell as claimed in claim 1 or 2, characterized in that the electrolyte comprises lithium iodide.

**Patentansprüche**

1. Elektrochemische Lithium-Trockenzelle, mit einer Lithium-Anode, einem Feststoff-Elektrolyten, der Lithiumionen zu transportieren vermag und einem hohen elektronischen Widerstand hat, aus Lithiumnitrid, Lithiumsulfid, Lithiummetaborat und/oder Lithiumiodid, wobei die Lithium-Anode mit dem Feststoff-Elektrolyten in Berührung steht, und einer Kathode, die mit dem Elektrolyten reagiert, derart, daß sich an Ort und Stelle eine selbstheilende Trennschicht aus elektrolytisch leitfähigem Reaktionsprodukt aus (der Reaktion zwischen) dem Elektrolyten und dem Kathodenmaterial zu bilden vermag, wobei die Anode und die Kathode über den Elektrolyten und die an Ort und Stelle gebildete selbstheilende Trennschicht elektrolytisch miteinander in Berührung stehen, dadurch gekennzeichnet, daß das Kathodenmaterial aus einer oder mehreren Substanzen in Form von Chloriden und Bromiden von Bismut, Zinn, Kupfer, Blei oder Eisen und Fluoriden von Bismut, Zinn, Kupfer oder Eisen ist.

2. Elektrochemische Zelle nach Anspruch 1, dadurch gekennzeichnet, daß das Kathodenmaterial Ferrichlorid und/oder Bismuthbromide ist.

3. Elektrochemische Zelle nach Anspruch 1 oder 2, dadurch gekennzeichnet, daß der Elektrolyt Lithiumiodid enthält.

**Revendications**

1. Pile électrochimique solide à base de lithium, comprenant une anode en lithium, un électrolyte solide, apte à transporter des ions de lithium, et présentant une haute résistivité électronique, cet électrolyte ayant été choisi dans le groupe comprenant le nitrure, le sulphure, le métaborate et l'iodure de lithium, ladite anode étant en contact avec l'électrolyte solide, et une cathode réagissant avec l'électrolyte, de telle sorte qu'il se produit in situ une couche autogénératrice de séparation en produit électroconducteur sortant de la réaction entre l'électrolyte et la matière cathodique, l'anode et la cathode étant en contact électrolytique par l'intermédiaire de l'électrolyte et de la couche autogénératrice de séparation qui s'est formée in situ, caractérisée en ce que la matière cathodique est en une ou plusieurs des substances choisies dans le groupe comprenant les chlorures et les bromures de bismuth, d'étain, de cuivre, de plomb et de fer ou dans le groupe comprenant les fluorures de bismuth, d'étain, de cuivre et de fer.

2. Pile électrochimique selon la revendication 1, caractérisée en ce que

la matière cathodique est choisie dans le groupe comprenant le chlorure ferrique et le bromure de bismuth.

3. Pile électrochimique selon la revendication 1 ou 2, caractérisée en ce que l'électrolyte contient de l'iodure de lithium.

## Fig.1.

## Fig.2.

## Fig.3.